# EUROPEAN PATENT SPECIFICATION

(11) **EP 4 555 245 B1**
(45) Date of publication and mention of the grant of the patent: **22.04.2026**
(21) Application number: 23749154.3
(22) Date of filing: 12.07.2023
(51) Int. Cl.: F16L 7/00, F16L 3/01

(54) **A SPACER COLLAR FOR REDUCING FRICTION BETWEEN TUBES**
DISTANZRING ZUR VERMINDERUNG DER REIBUNG ZWISCHEN ROHREN
COLLIER D'ESPACEMENT POUR RÉDUIRE LE FROTTEMENT ENTRE DES TUBES

(30) Priority: 12.07.2022 IT 202200014572
(43) Date of publication of application: 21.05.2025
(73) Proprietor: RACI S.r.l., 20128 Milano (IT)
(72) Inventor: PATERLINI, Aronne, 20821 Meda (IT)
(74) Representative: Cinquantini, Bruno
(86) International application number: PCT/IB2023/057141
(87) International publication number: WO 2024/013669

(56) References cited:
- DE-A1- 3 200 188
- GB-A- 2 531 601
- US-A- 6 003 559

## Description

### Field of the invention

The present invention relates to a spacer collar wrapping a first tube on the cylindrical outer surface thereof, which allows a spacing from the inner surface of a second covering tube into which the first tube is inserted.

### Background art

Underground tubes are usually used for distributing gas and water and for conveying wastewater, or for other applications. These tubes must be adequately protected from stress and external loads to prevent breakages, which can have damaging consequences. In particular, where said tubes cross roads, railways or similar, or in places where said tubes run parallel to said infrastructures, it is necessary, besides being required by law in many countries, for them to be inserted into outer covering tubes or protected by means of jacketed tubes. The two inner and outer tubes must be kept separate from each other, with the inner wall of the covering tube at a suitable distance from the outer wall of the inner tube. Therefore, to this end, spacer collars are used that are wrapped about the inner tube at determined intervals along the length thereof and thereby, sections of tube and counter tube are made in the pipes of mains for distributing drinking water, sewage, gas or petrochemical fluids, for example, in accordance with the standard EN 1594.

These spacer collars are secured to the outer surface of the inner tube so that they cannot slide along the tube during the operation of insertion into the covering tube and without creating an obstacle to the insertion.

The collars are made of a material suitable for mechanical resistance and corrosion, besides ensuring the electrical insulation between the tube and the covering tube and therefore plastic materials are preferred, like polyethylene.

A spacer collar for a tube is known from document EP1783412A having a system to regulate the height in the radial direction of the collar, and such solution provides a plurality of spacers on the outer surface of the collar, arranged in the radial direction around the tube. Additional elements are arranged on part of the spacers in order to increase the radial lengths thereof and the interspace between the outer surface of the inner tube and the inner surface of the jacketed tube. Another known spacer collar is disclosed in DE3200188A1.

### Summary of the invention

Therefore, a spacer collar for tubes is the object of the present invention, which has a closed cylindrical shape, in use, defining a longitudinal axis A, adapted to be applied to the outer surface of a first inner tube, comprising a substantially flat and elongated rectangular-shaped support base when it is not in a mounted shape thereof on the outer surface of the first inner tube, a plurality of projections protruding from the support base, each containing an inner cavity, a rotatable element arranged in said inner cavity comprising two respective rotation pins defining a rotation axis C thereof, two seats made on a respective wall of each projection , said two respective rotation pins being arranged in said two seats, wherein the rotation axis C of each rotatable element is orthogonal to the axis A when the spacer collar is in the mounted shape thereof.

Substantial advantages are obtained, by virtue of the features of the collar in accordance with the invention with respect to the tubes of the state of the prior art, such as a reduction in friction and consequently the pulling force required to cause the inner tube to slide in the second covering tube. The reduction in the force required means using less powerful pulling machines resulting in a reduction in costs of laying the tube.

Another advantage offered by the collar is the capacity thereof to ensure elevated loads by virtue of the particular shape of the resting support of the ball on the jacketed tube. The ball shape of the rotatable support elements is particularly more advantageous than the cylindrical shape because it gives to the inner tube greater slidability and stability during the insertion step.

The special shape of the housing of the ball has a scraper effect, which exerts a self-cleaning action as it allows eliminating the impurities collected during the sliding step, ensuring the efficiency of the support. The choice of the particular PA66 material offers elevated resistance to compression and wear.

The dependent claims describe preferred embodiments of the invention, forming an integral part of the present description.

### Brief description of the figures

Further features and advantages of the invention will be more apparent in light of the detailed description of preferred but not exclusive embodiments of a spacer collar, illustrated by way of non-limiting example, with the aid of the accompanying drawings, in which:
Fig. 1 is an axonometric view of a spacer collar in accordance with the invention;
Fig. 2 is an axonometric view of an element forming the spacer collar in figure 1;

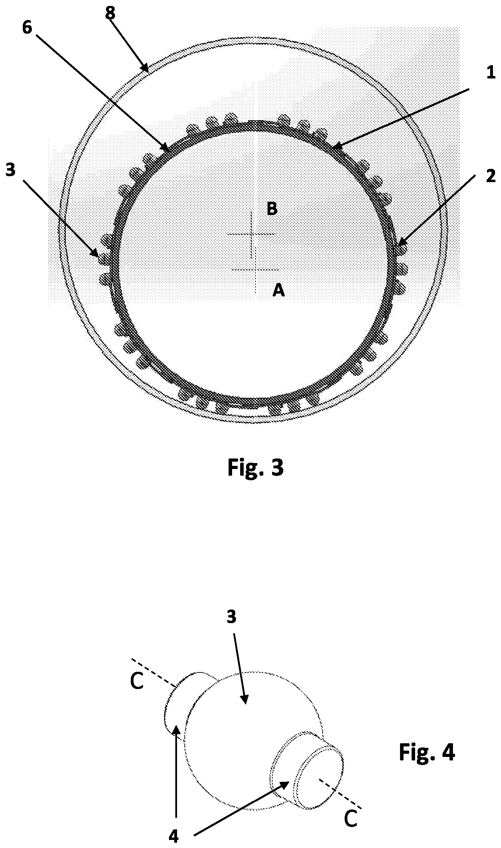

Fig. 3 is a section on a plane transverse to the longitudinal axis of a first inner tube onto which the spacer collar of the invention is inserted, inserted into a second covering tube;
Fig. 4 is an enlarged constituent element of the spacer collar of the invention, detached therefrom;

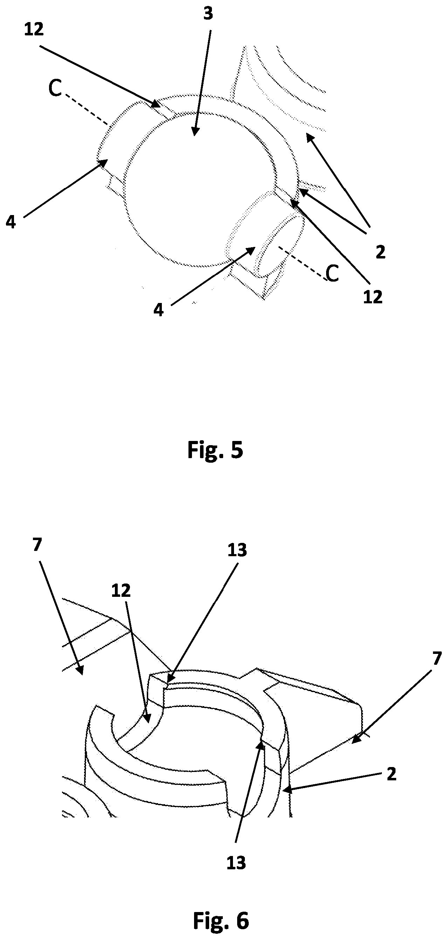

Fig. 5 is a section of the constituent element in Fig. 4 mounted on the sectioned projection thereof;
Fig. 6 is an enlarged axonometric view of a projection supporting the constituent element in Fig. 4.

The same reference numerals and letters in the figures identify the same elements or components.

### Detailed description of preferred embodiments of the invention

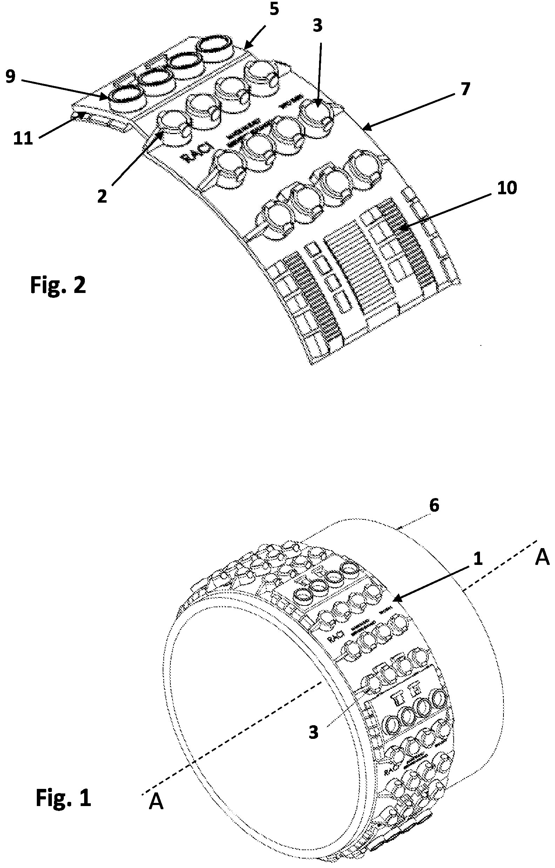

With particular reference to figure 1 a spacer collar, globally denoted with reference numeral 1, in accordance with the invention and shown in the mounted state thereof on the tube 6, is in the shape of a ring. On the outer surface thereof, the collar 1 comprises a series of projections 2 protruding from the surface 7 thereof, each having a respective inner cavity, each of which has a shape corresponding to the seat of a respective rotatable element 3, advantageously in the shape of a ball. The projection 2 serves as a support for the respective rotatable element 3.

Each rotatable element 3 is capable of rotating about an axis C thereof, which is arranged orthogonally to the longitudinal axis A of the tube 6 when the collar 1 is closed and forms a loop about the tube 6. The rotation of the balls 3 is allowed by the presence, for each of them, of a respective cylindrical pin 4 protruding from the two diametrically opposite ends, along the rotation axis C thereof, and which is inserted into a corresponding cut-out 12 made in the projection 2, serving as a support for the respective pin 4.

The pin 4 of each rotatable element 3 can also be made as an integral element of the rotatable element 3 protruding from both diametrically opposite ends thereof, made, e.g., by means of molding, in a perfectly known manner.

The support 12 of the ball 3 in the projection 2 is advantageously made with an increased thickness, equal to 7 mm or more, with respect to the thickness of the remaining part of the wall of the projection 2 to ensure sufficient support for high loads.

In a particularly advantageous embodiment of the spacer collar 1, the realization of a tooth or a small step or a protrusion 13 is provided along the inner surface of the projection 2 or on the outermost edge thereof extending in the radial direction towards the center from the cavity of the projection 2. Said small step 13, protruding in the radial direction and dimensioned to come into contact or be very close to the surface of the ball 3, causes a scraper effect on the surface of the ball 3 during the rolling and thus has a self-cleaning function and allows the impurities collected during the sliding of the inner tube 6 in the jacketed tube 8 to be eliminated, ensuring greater efficiency of the spacer collar 1.

As an alternative to the rotatable ball elements 3, it is also possible to use rotatable elements having the rolling surface in the shape of a convex spatial curve, such as in the shape of a barrel, for example, with the diameter section greater in the middle than at the two end surfaces, considering the C axis.

The ball shape of the surface of the balls 3, as well as the barrel shape, offers the advantage of making a contact surface between the surface of the ball and the cylindrical surface of the jacketed tube, which is smaller than that of a perfectly cylindrical roller, thus allowing improved sliding of the spacer collar 1 and greater stability during the insertion step of inserting the first inner tube 6 into the jacketed tube 8.

The rotatable elements 3 are made of plastic and are preferably full. Advantageously, they are made of PA66, which is a material that offers elevated resistance to compression and wear.

The height of the projections 2 with the inserted rotatable balls or elements 3 is such as to allow the existence of a sufficient distance between the surface of the outer wall of the first tube 6 and the inner surface of the second covering tube 8, also alternatively defined in this description as a jacketed tube, having the longitudinal axis B, generally offset with respect to the axis A of the first tube 6, the diameter thereof being greater than that of the first tube 6.

The collar 1 can be made of a customized single piece having a circumferential length equal to the circumference of the inner tube 6.

In a preferred alternative embodiment as an alternative to the previous one, the collar 1 consists of some substantially flat or slightly curved segments 7, which are coupled to one another to form a collar having the required length to cover the whole circumferential perimeter of the inner tube 6. These segments 7 are provided with coupling elements, which are complementary to the two longitudinal ends thereof. For example, laterally protruding teeth 11 are made at a first end 5 and, at a second end thereof, corresponding recesses 10 are provided having a complementary shape to the teeth 11. The teeth 11 of a segment 7 are designed to be inserted into the recesses 10 of another adjacent segment, not shown, thus forming a rapid interlocking connection, avoiding the use of screws or bolts, which result in a slower operation of securing the spacer collar 1.

The recesses 10 are made for an even longer length than the length that is strictly necessary to allow the coupling of the teeth 11 of the adjacent segment. Thereby, the teeth 11 can be longitudinally coupled to the recesses 10 in different positions so as to allow the length of the circumference of the spacer collar 1 to be adapted to the circumference of the inner tubes 6 onto which it must be mounted, thus managing to adapt the length of the collar 1 to various tube diameters. After the coupling between the various segments 7, in order to prevent the collar 1 from separating under stress or during the operation of inserting the inner tube into a jacketed tube, after the coupling of the teeth 11 in the corresponding recesses 10, the recesses 10 are tightened on the teeth 11, e.g., by means of grippers.

In another alternative embodiment of the spacer collar 1 of the invention, only some parts of the outer surface of the spacer collar 1 are covered with projections 2 provided with rotatable elements 3, while other parts of the surface of the collar can be covered with simple radial spacers 9 of the type known in the prior art, i.e. empty and without rotatable elements 3.

The collar 1 is formed by a flexible material, such as plastic resin, for example, in particular HDPE.

Now we shall describe an insertion method for inserting the first tube 6 provided with the collar 1 of the invention into the second covering tube 8.

The collar 1 is formed by coupling a series of segments 7 to one another by means of engaging the teeth 11 of the end of a segment in the recesses 10 of the end of another segment, which is immediately adjacent, until the length needed to cover the inner tube 6 is reached. When extended and not closed, the collar is substantially flat, being made of a flexible material. The collar 1 is then wrapped and coupled about the outer surface of the first tube 6 so as to form a circular loop, which covers the outer surface of the tube 6 and is thus secured so as not to let it move parallel to the axis A from the position thereof when the tube 6 is pulled axially using the usual pulling machines.

Precautions can be taken during installation so that the segments of the collar 1 provided with rotatable balls 3 are placed at least on the arch of the crown of the inner tube 6, which must be rested on the inner surface of the covering tube 8.

Depending on how long the section of first inner tube 6 is, which must be inserted into the second covering tube 8, several collars 1 can be arranged at appropriately defined distances between one another.

When all the collars needed for covering the predetermined axial length are arranged about the first inner tube 6, the latter is axially inserted into the second covering tube 8 and pulled with the pulling devices of the type known for the aforesaid operations, causing the rotatable balls 3 to slide until the position provided for the first tube 6 along the second tube 8.

Sometimes the longitudinal movement of the inner tube 6 during the pulling causes the collar 1 to rotate about the longitudinal axis A. This is a natural phenomenon, which may accompany said operation. Following the rotation of the tube and the crown, the support arch changes and therefore also the type of element in contact with the inner surface of the jacketed tube 8. The result is that for some sections of the path, the projections 9 devoid of rotatable balls, are in direct contact with the inner surface of the jacketed tube 8, in the spacer collar 1 variants, in which the rotatable elements 3 do not cover the whole surface of the collar segments.

However, it has been found that in the presence of rotatable elements or balls 3, the phenomenon of the axial rotation of the inner tube 6 occurs less frequently since the balls 3 almost create "guides" along which the tube 6 can slide.

In any case, the presence of the rotatable elements and in particular the rotatable balls 3 beneficially results in a reduction of the pulling force needed for the insertion, without compromising the advantages offered by using the spacer collar 1 of the invention, which are, for example,
- creating the desired distance between the inner tube 6 and the jacketed tube 8,
- ensuring the electrical insulation between the tubes to increase protection from corrosion,
- enabling a secure attachment on the inner tube 6,
- increasing resistance to chemical agents of the collar 1 and the inner tube 6,
- increasing resistance to thermal shocks, which may occur during the insertion of the first tube 6 into the covering tube 8,
- significantly improving the sliding of the inner tube 6 by virtue of the presence of the rotatable elements or rotatable balls 3,
- ensuring easy installation of the rotatable balls 3 with respect to the use of traditional non-rotatable, radial spacer elements.

## Claims

1. A spacer collar (1) for tubes having a closed cylindrical shape, in use,
defining a longitudinal axis (A) thereof,
adapted to be applied to the outer surface of an inner tube (6), comprising a substantially flat and elongated rectangular-shaped support base when it is not in a shape thereof mounted on the outer surface of the inner tube (6),
a plurality of projections (2) protruding from the support base, each containing an inner cavity,
a rotatable element (3) arranged in said inner cavity **characterized in that** the rotatable element (3) comprises two respective rotation pins (4) defining a rotation axis (C) thereof and two seats (12) made on a wall of each projection (2),
said two respective rotation pins (4) being arranged in said two seats (12), wherein the rotation axis (C) each rotatable element (3) is orthogonal to the axis (A) when the spacer collar (1) is in the mounted shape thereof.

2. A collar according to the preceding claim, wherein the rotatable element (3) is a ball or a barrel shape.

3. A collar according to one of the preceding claims, wherein each projection (2) has at least two first wall parts where the two seats (12) are made, having a first thickness of at least 7 mm and at least a second wall part of the projection (2) having a second thickness, which is less than said first thickness.

4. A collar according to one of the preceding claims, wherein a tooth or a small step or a protrusion (13) is provided on the surface of the inner cavity of the projection (2) extending in the circumferential direction and protruding in the radial direction towards the center of the inner cavity of the projection (2), so as to cause a scraper effect on the rotating element surface (3) during a rolling inside the respective projection (2).

5. A collar according to one of the preceding claims, wherein rapid coupling elements (10, 11) are provided and arranged at two ends of the support base for joining said two ends and securing the collar (1) in said cylindrical shape.

6. A collar according to one of the preceding claims, wherein it consists of several segments (7) having the rapid coupling elements arranged at each respective end so as to form the collar (1) joining the rapid coupling elements to one another.

7. A collar according to one of the preceding claims, wherein zones of the outer surface of the collar (1) are provided with radial projections (9) not containing rotating elements.

8. A collar according to one of the preceding claims, made of plastic resin, in particular of PA66.

## Patentansprüche

1. Distanzring (1) für Rohre, der im Gebrauch eine geschlossene zylindrische Form aufweist und eine Längsachse (A) davon definiert,
der zum Anbringen an der Außenoberfläche eines Innenrohrs (6) ausgelegt ist, umfassend eine im Wesentlichen flache und längliche, rechteckig geformte Stützbasis, wenn er in einer nicht an der Außenoberfläche des Innenrohrs (6) montierten Form davon vorliegt,
eine Vielzahl von Vorsprüngen (2), die aus der Stützbasis herausragen und jeweils einen inneren Hohlraum enthalten,
ein drehbares Element (3), das in dem inneren Hohlraum angeordnet ist, **dadurch gekennzeichnet, dass** das drehbare Element (3) zwei jeweilige Drehzapfen (4), die eine Drehachse (C) davon definieren, und zwei Sitze (12) umfasst, die an einer Wand jedes Vorsprungs (2) ausgebildet sind,
wobei die beiden jeweiligen Drehzapfen (4) in den beiden Sitzen (12) angeordnet sind, wobei die Drehachse (C) jedes drehbaren Elements (3) orthogonal zu der Achse (A) ist, wenn sich der Distanzring (1) in dessen montierter Form befindet.

2. Ring nach dem vorhergehenden Anspruch, wobei das drehbare Element (3) eine Kugel- oder eine Tonnenform aufweist.

3. Ring nach einem der vorhergehenden Ansprüche, wobei jeder Vorsprung (2) mindestens zwei erste Wandteile, in denen die beiden Sitze (12) ausgebildet sind, mit einer ersten Dicke von mindestens 7 mm, und mindestens ein zweites Wandteil des Vorsprungs (2) mit einer zweiten Dicke aufweist, die geringer ist als die erste Dicke.

4. Ring nach einem der vorhergehenden Ansprüche, wobei ein Zahn oder eine kleine Stufe oder ein Vorsprung (13) auf der Oberfläche des inneren Hohlraums des Vorsprungs (2) vorgesehen ist, der sich in Umfangsrichtung erstreckt und in radialer Richtung zur Mitte des inneren Hohlraums des Vorsprungs (2) hervorragt, um während eines Rollens innerhalb des jeweiligen Vorsprungs (2) einen Abstreifeffekt auf die Oberfläche des drehenden Elements (3) zu bewirken.

5. Ring nach einem der vorhergehenden Ansprüche, wobei Schnellkupplungselemente (10, 11) vorgesehen und an zwei Enden der Stützbasis angeordnet sind, um die beiden Enden zu verbinden und den Ring (1) in der zylindrischen Form zu sichern.

6. Ring nach einem der vorhergehenden Ansprüche, wobei er aus mehreren Segmenten (7) besteht, an deren jeweiligen Enden die Schnellkupplungselemente angeordnet sind, um den Ring (1) zu bilden, indem die Schnellkupplungselemente miteinander verbunden werden.

7. Ring nach einem der vorhergehenden Ansprüche, wobei Bereiche der Außenoberfläche des Rings (1) mit radialen Vorsprüngen (9) versehen sind, die keine drehenden Elemente enthalten.

8. Ring nach einem der vorhergehenden Ansprüche, der aus Kunststoffharz, insbesondere aus PA66, hergestellt ist.

## Revendications

1. Bague entretoise (1) pour tubes ayant une forme cylindrique fermée, en cours d'utilisation, définissant un axe longitudinal (A) de celle-ci,
adaptée pour être appliquée sur la surface extérieure d'un tube intérieur (6), comprenant une base de support de forme rectangulaire sensiblement plate et allongée lorsqu'elle n'est pas dans sa forme montée sur la surface extérieure du tube intérieur (6),
une pluralité de saillies (2) faisant saillie de la base de support, chacune contenant une cavité intérieure,
un élément rotatif (3) disposé dans ladite cavité interne, **caractérisé en ce que** l'élément rotatif (3) comprend deux goujons de rotation respectifs (4) définissant un axe de rotation (C) de celui-ci et
deux sièges (12) réalisés sur une paroi de chaque saillie (2),
lesdits deux goujons de rotation respectifs (4) étant disposés dans lesdits deux sièges (12), dans laquelle l'axe de rotation (C) de chaque élément rotatif (3) est orthogonal à l'axe (A) lorsque la bague entretoise (1) est dans sa forme montée.

2. Bague selon la revendication précédente, dans laquelle l'élément rotatif (3) est une boule ou une forme de cylindre.

3. Bague selon l'une des revendications précédentes, dans laquelle chaque saillie (2) possède au moins deux premières parties de paroi où les deux sièges (12) sont réalisés, ayant une première épaisseur d'au moins 7 mm et au moins une deuxième partie de paroi de la saillie (2) ayant une deuxième épaisseur qui est inférieure à ladite première épaisseur.

4. Bague selon l'une des revendications précédentes, dans laquelle une dent ou une petite marche ou une protubérance (13) est prévue sur la surface de la cavité intérieure de la saillie (2) s'étendant dans la direction circonférentielle et faisant saillie dans la direction radiale vers le centre de la cavité intérieure de la saillie (2), de manière à provoquer un effet de raclage sur la surface d'élément rotatif (3) pendant un roulement à l'intérieur de la saillie respective (2).

5. Bague selon l'une des revendications précédentes, dans laquelle des éléments de couplage rapide (10, 11) sont prévus et disposés aux deux extrémités de la base de support pour joindre lesdites deux extrémités et fixer la bague (1) dans ladite forme cylindrique.

6. Bague selon l'une des revendications précédentes, dans laquelle elle est constituée de plusieurs segments (7) ayant des éléments d'accouplement rapide disposés à chaque extrémité respective de manière à former la bague (1) qui joint les éléments d'accouplement rapide les uns aux autres.

7. Bague selon l'une des revendications précédentes, dans laquelle des zones de la surface extérieure de la bague (1) sont pourvues de saillies radiales (9) ne contenant pas d'éléments rotatifs.

8. Bague selon l'une des revendications précédentes, réalisée en résine plastique, notamment en PA66.
